# EUROPEAN PATENT APPLICATION

(11) **EP 4 838 061 A1**
(43) Date of publication of application: **11.11.2026**
(21) Application number: 26176714.9
(22) Date of filing: 05.05.2026
(51) Int. Cl.: F01D 25/16, F16C 19/06, F16C 27/04, F16C 27/06, F16C 35/04, F16C 37/00, F16F 9/00, F16F 9/30, F16F 9/42

(54) **CERAMIC PIN DAMPED BEARING SUPPORT**

(30) Priority: 06.05.2025 US 202519199785
(71) Applicant: Pratt & Whitney Canada Corp., Longueuil, Québec J4G 1A1 (CA)
(72) Inventor: TOMES, Nathan, Quebec, J4G 1A1 (CA); RICHARDSON, Tyler, Quebec, J4G 1A1 (CA)
(74) Representative: Dehns

(57) **Abstract**

Bearing damper systems (200, 300, 300, 500, 600, 700, 800, 900, 1000) include a bearing structure (208, 306, 408, 506, 606, 706, 806, 906, 1006) arranged about an axis (202) and a housing (204, 304, 406, 504, 604, 704, 804, 904, 1004) arranged radially outward from the bearing structure (208, 306, 408, 506, 606, 706, 806, 906, 1006) relative to the axis (202). The housing (204, 304, 406, 504, 604, 704, 804, 904, 1004) defines a plurality of radially extending channels (210, 612, 726) arranged circumferentially about the axis (202). A set of energy dissipating elements (206, 602, 702) are arranged within the channels (210, 612, 726) and are arranged to receive a radial outward force from the bearing structure. Each energy dissipating element (206, 602, 702) is arranged to be compressed in response to a radial movement of the bearing structure toward the respective energy dissipating element (206, 602, 702) and enter a loaded state wherein energy associated with said compression is absorbed into the energy dissipating element (206, 602, 702). Each energy dissipating element (206, 602, 702) is configured to convert at least a portion of the absorbed energy to heat and to return to an unloaded state after removal of the load from the bearing structure.

## Description

### TECHNICAL FIELD

Embodiments of the present disclosure pertain to the art of gas turbine engines, and more particularly to bearing support systems thereof.

### BACKGROUND

Aircraft engines, such as main engines and auxiliary power units, rely upon rotating components to generate thrust and/or power. The rotating components are mounted to, rotationally attached, and/or integrated as a single piece with one or more engine shafts within the engine. The engine shafts are typically supported on one or more bearing assemblies. Squeeze film dampers may be used between some bearing outer races and associated bearing housings of the bearing assemblies. Squeeze film dampers may be used to improve rotor stability, allow transit through resonance speeds without damaging hardware, decrease vibrations during operation of the gas turbine engines, and/or reduce vibrations transmitted from the engine to the airframe. Most squeeze film dampers require an additional load path to center the rotor, such as by using a squirrel cage.

### BRIEF DESCRIPTION

According to some embodiments, bearing damper systems are provided. The bearing damper systems include a bearing structure arranged about an axis, a housing arranged radially outward from the bearing structure relative to the axis, the housing defining a plurality of radially extending channels arranged circumferentially about the axis, and a set of energy dissipating elements, wherein one energy dissipating element of the set of energy dissipating elements is arranged within each channel of the housing and arranged to receive a radial outward force from the bearing structure. Each energy dissipating element is arranged to be compressed in response to a radial movement of the bearing structure toward the respective energy dissipating element and enter a loaded state wherein energy associated with said compression is absorbed into the material of the respective energy dissipating element, each energy dissipating element is configured to convert at least a portion of the absorbed energy to heat, and each energy dissipating element is configured to return to an unloaded state after removal of the load from the bearing structure.

In addition to one or more of the features described herein, or as an alternative, further embodiments of the bearing damper systems may include that each energy dissipating element is made from a MAX Phase material.

In addition to one or more of the features described herein, or as an alternative, further embodiments of the bearing damper systems may include that each energy dissipating element is made from a MAX Phase ceramic.

In addition to one or more of the features described herein, or as an alternative, further embodiments of the bearing damper systems may include that each energy dissipating element is maintained under a preload that applies a radial inward force to the bearing structure.

In addition to one or more of the features described herein, or as an alternative, further embodiments of the bearing damper systems may include that the bearing structure comprises a tapered surface, wherein during installation of the bearing structure into the housing, the tapered surface contacts ends of the energy dissipating elements and applies a preload to the energy dissipating elements.

In addition to one or more of the features described herein, or as an alternative, further embodiments of the bearing damper systems may include a retention ring arranged about an outer diameter of the housing, the retention ring configured to apply a preload to the plurality of energy dissipating elements.

In addition to one or more of the features described herein, or as an alternative, further embodiments of the bearing damper systems may include that the retention ring comprises a supply path to supply a working fluid to the plurality of energy dissipating elements.

In addition to one or more of the features described herein, or as an alternative, further embodiments of the bearing damper systems may include that the housing defines a cooling channel configured to receive the working fluid and direct the working fluid into thermal communication with the plurality of energy dissipating elements.

In addition to one or more of the features described herein, or as an alternative, further embodiments of the bearing damper systems may include a set of preload elements installed into the housing to apply the preload to each of the plurality of energy dissipating elements.

In addition to one or more of the features described herein, or as an alternative, further embodiments of the bearing damper systems may include that the plurality of energy dissipating elements define a first set of energy dissipating elements, the system further comprising a second set of energy dissipating element, wherein the energy dissipating elements of the second set of energy dissipating elements is axially offset from the energy dissipating elements of the first set of energy dissipating elements.

In addition to one or more of the features described herein, or as an alternative, further embodiments of the bearing damper systems may include that the bearing structure comprises a recess, wherein a first end of each energy dissipating element is configured to engage with the recess to axially fix the bearing structure in place.

In addition to one or more of the features described herein, or as an alternative, further embodiments of the bearing damper systems may include that the bearing structure is retained within the housing in an axial direction between a stop of the housing and a locking element.

In addition to one or more of the features described herein, or as an alternative, further embodiments of the bearing damper systems may include a squeeze film damper defined in a space between the bearing structure and the housing.

In addition to one or more of the features described herein, or as an alternative, further embodiments of the bearing damper systems may include an intermediate structure arranged between the housing and the bearing structure, wherein the intermediate structure contacts the energy dissipating elements on one side and the bearing structure on an opposite side.

In addition to one or more of the features described herein, or as an alternative, further embodiments of the bearing damper systems may include a squeeze film damper defined between the intermediate structure and the bearing structure.

In addition to one or more of the features described herein, or as an alternative, further embodiments of the bearing damper systems may include that the bearing structure comprises a squirrel cage.

In addition to one or more of the features described herein, or as an alternative, further embodiments of the bearing damper systems may include that each energy dissipating element is formed from a material that converts at least 5% of strain energy to heat.

In addition to one or more of the features described herein, or as an alternative, further embodiments of the bearing damper systems may include that each energy dissipating element has a circular cross-sectional shape.

In addition to one or more of the features described herein, or as an alternative, further embodiments of the bearing damper systems may include that each energy dissipating element has a width-to-length ratio of between 1:5 and 1:30.

According to some embodiments, aircraft engines are provided. The aircraft engines include a rotating component defining an axis, a bearing structure configured to rotationally support the rotating component, and a bearing damper system. The bearing damper system includes a housing arranged radially outward from the bearing structure relative to the axis, the housing defining a plurality of radially extending channels arranged circumferentially about the axis and a set of energy dissipating elements, wherein one energy dissipating element of the set of energy dissipating elements is arranged within each channel of the housing and arranged to receive a radial outward force from the bearing structure. Each energy dissipating element is arranged to be compressed in response to a radial movement of the bearing structure toward the respective energy dissipating element and enter a loaded state wherein energy associated with said compression is absorbed into the material of the respective energy dissipating element, each energy dissipating element is configured to convert at least a portion of the absorbed energy to heat, and each energy dissipating element is configured to return to an unloaded state after removal of the load from the bearing structure.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The following descriptions should not be considered limiting in any way. With reference to the accompanying drawings, like elements are numbered alike:
FIG. 1 is a schematic illustration of a gas turbine engine incorporating embodiments of the present disclosure;
FIG. 2A is a schematic illustration of a bearing damper system in accordance with an embodiment of the present disclosure;
FIG. 2B is a cross-sectional view of the bearing damper system of FIG. 2A as viewed along the line 2B-2B shown in FIG. 2A;
FIG. 3A is a schematic illustration of a portion of a bearing damper system in accordance with an embodiment of the present disclosure;
FIG. 3B is a cross-sectional view of the bearing damper system of FIG. 3A as viewed along the line 3B-3B shown in FIG. 3A;
FIG. 3C is a schematic view of the bearing damper system of FIG. 3A during a state of operation and application of a force;
FIG. 3D is a schematic view of the bearing damper system of FIG. 3A under application of a load;
FIG. 3E is a schematic view of the bearing damper system of FIG. 3A during release of the load;
FIG. 4 is a schematic illustration of another configuration of a portion of a bearing damper system in accordance with an embodiment of the present disclosure;
FIG. 5A is a schematic illustration of a portion of a bearing damper system in accordance with an embodiment of the present disclosure;
FIG. 5B is a cross-sectional view of the bearing damper system shown in FIG. 5A as viewed along the line 5B-5B shown in FIG. 5A;
FIG. 6 is a schematic illustration of another configuration of a bearing damper system in accordance with an embodiment of the present disclosure;
FIG. 7A is a schematic illustration of another configuration of a bearing damper system in accordance with an embodiment of the present disclosure;
FIG. 7B is a perspective view of the bearing damper system of FIG. 7A;
FIG. 8 is a schematic illustration of another configuration of a bearing damper system in accordance with an embodiment of the present disclosure;
FIG. 9 is a schematic illustration of another configuration of a bearing damper system in accordance with an embodiment of the present disclosure; and
FIG. 10 is a schematic illustration of another configuration of a bearing damper system in accordance with an embodiment of the present disclosure.

### DETAILED DESCRIPTION

A detailed description of one or more embodiments of the disclosed apparatus and method are presented herein by way of exemplification and not limitation with reference to the Figures.

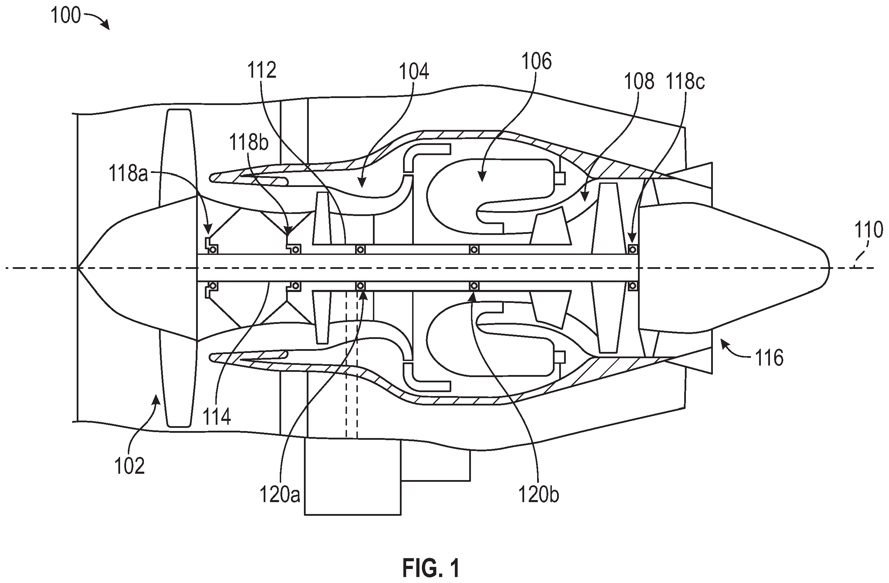

FIG. 1 is a schematic illustration of a gas turbine engine 100, such as an aircraft engine. The gas turbine engine 100 may be representative of a main aircraft engine configured to generate power and/or thrust, an auxiliary power unit configured to generate power, or the like, as will be appreciated by those of skill in the art. The gas turbine engine 100, in this non-limiting illustrative configuration, includes a fan section 102, a compressor section 104, combustor section 106, and a turbine section 108. The gas turbine engine 100 may be configured with two spools or shafts arranged along an engine axis 110, such as with a high-speed shaft 112 and a low-speed shaft 114. In such configurations, the gas turbine engine 100 may include a low-pressure compressor of the compressor section 104 and a low-pressure turbine of the turbine section 108 each operably coupled to the low-speed shaft 114. Similarly, a high-pressure compressor of the compressor section 104 and a high-pressure turbine of the turbine section 108 may each be operably coupled to the high-speed shaft 112. It will be appreciated that other engine configurations are possible without departing from the scope of the present disclosure.

In operation, the fan section 102 is configured to direct at least a portion of a core flow into a core flow path that passes into the compressor section 104 for compression of the incoming air. The compressed air is then directed into the combustor section 106 for combustion with fuel. The combusted gases are then expanded through the turbine section 108, which drives rotation of the engine shafts 112, 114, and then the expanded combustion gases are expelled through a nozzle section 116 of the gas turbine engine 100. In some embodiments, the gas turbine engine 100 may be configured in a bypass arrangement, as will be appreciated by those of skill in the art.

As schematically illustrated in FIG. 1, the low-speed shaft 114 is rotationally supported within the gas turbine engine 100 by a number of axially spaced-apart bearing assemblies 118a-c that are concentrically mounted about the engine axis 110 of the gas turbine engine 100. The low-speed shaft 114 is supported at its front, upstream, or forward end by a first bearing assembly 118a and a second bearing assembly 118b and at a rear, downstream, or aft end thereof by a third bearing assembly 118c. The high-speed shaft 112 may be rotationally supported on the low-speed shaft 114 via a set of axially spaced-apart bearing assemblies, with a first bearing assembly 120a arranged at a front, upstream, or forward end of the high-speed shaft 112 and a second bearing assembly 120b arranged at a rear, downstream, or aft end of the high-speed shaft 112.

The arrangement of bearing assemblies for a particular gas turbine engine, including but not limited to the number and type of bearings selected, is typically determined by a number of factors specific to configuration and features of the gas turbine engine. Accordingly, the arrangement of bearing assemblies described herein is exemplary only and is not intended to be limiting. For example, and without limitation, the first and third bearings assemblies 118a and 118c may be roller bearings for radially supporting the low-speed shaft 114 and the second bearing assembly 118b may be a thrust bearing to provide both axial and radial support to the low-speed shaft 114. As shown, the first bearing assembly 118a is arranged adjacent the fan section 102 and the second bearing assembly 118b is arranged downstream from the first bearing assembly 118b along the low-speed shaft 114. The second bearing assembly 118b, in some configurations, may be arranged axially between a low-pressure compressor and a high-pressure compressor of the compressor section 104. The bearing assemblies 120a-b that support the high-speed shaft 112 may be roller bearing assemblies or the like and may be positioned at multiple axial locations along the high-speed shaft 112. It will be appreciated the bearing assemblies may be arranged in any suitable fashion, which may be determined by the specific engine configuration. The bearing assemblies 118a-c, 120a-b, and/or other bearing assemblies may be used to rotationally support rotating components of the gas turbine engine 100, such as the shafts 112, 114 and/or the rotating components of the fan section 102, the compressor section 104, and/or the turbine section 108 (e.g., rotors, fans, etc.).

The bearing assemblies 118a-c, 120a-b illustrated in FIG. 1, and/or other bearings within the gas turbine engine 100 may be configured with dampers to improve rotor stability, allow transit through resonance speeds without damaging hardware, decrease vibrations during operation of the gas turbine engine, and/or reduce vibrations transmitted from the engine to the airframe. Such dampers may be squeeze film dampers that are arranged between bearing outer races and associated bearing housings of the bearing assemblies. Typically, squeeze film dampers may require an added load path to center the rotor, such as a squirrel cage.

In view of the above and other considerations, in accordance with embodiments of the present disclosure, bearing support assemblies are provided that achieve damping and centering functionality, which may be used independently from or in combination with squeeze film dampers. In accordance with embodiments of the present disclosure, bearing support assemblies are arranged to support and absorb energy of associated bearing assemblies. Embodiments of the present disclosure include a series of energy dissipating elements (e.g., pins, rods, etc.) made of energy dissipating material(s) that can absorb radial forces within the energy dissipating element, and dissipate at least a portion of the energy as heat, resulting in less energy being released when a load is removed. The energy dissipating elements may be arranged within the bearing support assembly and about a bearing assembly to act as linear dampers (linear in a radial direction). These energy dissipating elements are in turn supported within holes in a surrounding support structure of the bearing support assembly. The energy dissipating material, in accordance with embodiments of the present disclosure, may be any material that can absorb a portion of a load and convert such energy (e.g., strain energy) to heat while recovering fully to an initial shape when the load is removed.

For example, and without limitation, the energy dissipating material of embodiments of the present disclosure may be a MAX phase material (e.g., MAX phase ceramic). Some MAX phase materials are capable of converting a portion of imparted strain energy to heat (e.g., 10-40% of strain energy may be converted to thermal energy and dissipated as heat). MAX phase materials are materials having layered, hexagonal carbides and nitrides which have the general formula: Mₙ₊₁AXₙ (MAX), where n = 1 to 4, M is an early transition metal, A is an A-group element, and X is carbon and/or nitrogen. The layered structure consists of edge-sharing, distorted XM₆ octahedra interleaved by single planar layers of the A-group element. Some example compositions of MAX phase materials that may be employed with embodiments of the present disclosure are: Ti₃AlC₂, Ti₃GaC₂, Ti₃InC₂, V₃AlC₂, Ti₃SiC₂, Ti₃GeC₂, Ti₃SnC₂, Ta₃AlC₂, Ti₃ZnC₂, Zr₃AlC₂. It will be appreciated that this is a non-exhaustive list, and other MAX phase materials may be employed without departing from the scope of the present disclosure.

As the engine operates, unbalance forces cause the rotating components (e.g., shafts, rotors, etc.) to move radially. In accordance with embodiments of the present disclosure, the energy dissipating elements are arranged to dampen and center the movement of the rotating component, thereby reducing the radial motion of the respective rotating component. For example, the energy dissipating elements may be circumferentially arranged or distributed about the circumference of the rotating component. The energy dissipating elements may be arranged in specific locations to allow for damping of movement of the respective rotating component in radial directions. During radial shifts of the rotating components, the energy dissipating elements will undergo a compressive load and convert part of the imparted strain energy to heat. When the force or load from the rotating component is removed, the energy dissipating elements will return to an uncompressed state. The returning force of the energy dissipating element on the rotating component (e.g., via a bearing outer race) will be less than the initial load, due to the heat dissipation.

In accordance with some embodiments, the heat is removed through radiation and conduction to a support housing of the energy dissipating elements. In other embodiments, active cooling may be provided using a cooling fluid (e.g., liquid, gas, etc.) to aid in removal of heat from the energy dissipating elements. The energy dissipating elements may be preloaded in a neutral state so that the energy dissipating elements do not lose contact when deflection is in a direction opposite from the location of the energy dissipating element. In accordance with some embodiments, the energy dissipating elements may be relatively long and thin in order to provide for a relatively low stiffness and to increase the damping effect. Such relatively long and thin energy dissipating elements may be supported along the length of the energy dissipating elements to prevent failure by buckling. In accordance with some embodiments, the support of the energy dissipating elements may be achieved by inserting the energy dissipating elements into holes in the support housing. In accordance with embodiments of the present disclosure, the energy dissipating elements may provide multiple functionalities by operating as both a damper and a centering feature.

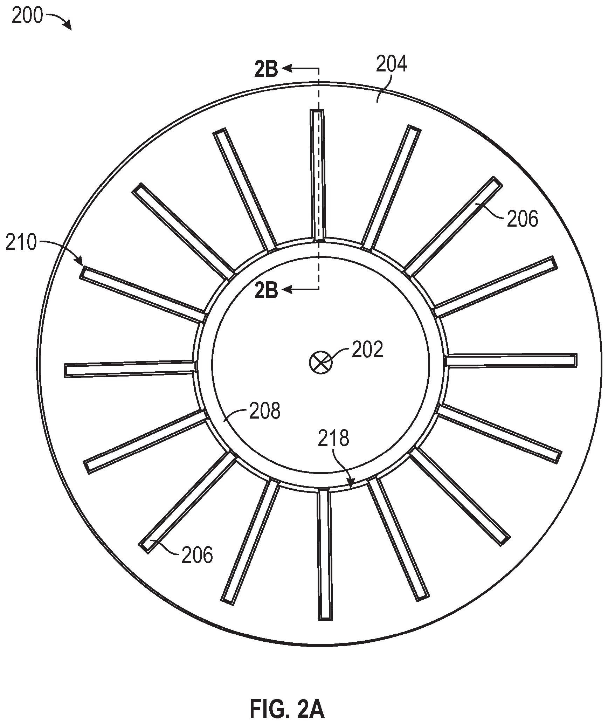

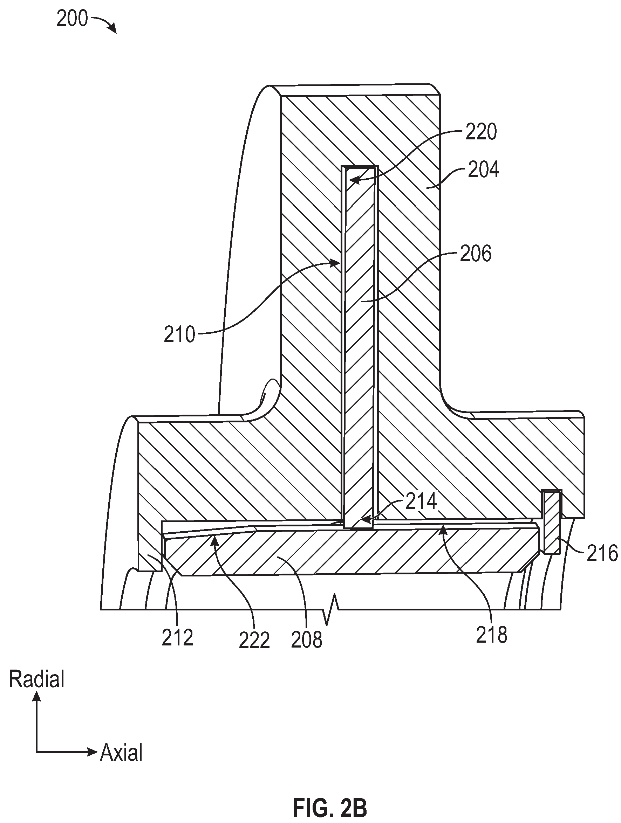

Referring now to FIGS. 2A-2B, schematic illustrations of a bearing damper system 200 in accordance with an embodiment of the present disclosure are shown. FIG. 2A is a cross-sectional view of the bearing damper system 200 viewed along an axis 202 (e.g., engine axis), and FIG. 2B is a cross-sectional view of the bearing damper system 200 viewed along the line 2B-2B shown in FIG. 2A. the bearing damper system 200 includes a housing 204 and a set of energy dissipating elements 206 arranged circumferentially about the axis 202. The energy dissipating elements 206 are configured to selectively engage with a bearing structure 208, such as a bearing outer race.

The bearing damper system 200 is arranged to absorb a portion of the energy caused by shifting of rotating components within the engine. For example, rotating components of engines may thermally expand radially outward during operation or may shift radially in one or more directions. As these deflections and changes in radial position occur, the bearing structure 208 will be moved in a similar fashion, radially outward, inward, and/or off-center. As the bearing structure 208 is urged radially outward from the axis 202, the bearing structure 208 will apply a force upon the energy dissipating elements 206. The energy dissipating elements 206, in this illustrative configuration, are a set of pin-like elements, rods, shafts, or the like, which are formed from specific materials, such as MAX Phase materials. As the bearing structure 208 applies a radially outward force upon the energy dissipating elements 206, the energy dissipating elements 206 will be compressed within the housing 204.

In this example illustrative configuration, the energy dissipating elements 206 are arranged in respective channels 210, such as bores, holes, or the like. In this illustrative configuration, the channels 210 may be dead-end channels that are drilled or otherwise formed within the housing 204, with an open end at the radially inward end of the respective channels 210. The energy dissipating elements 206 may be inserted into the respective channels 210 of the housing 204, and then the bearing structure 208 may be installed within the housing 204.

As shown in FIG. 2B, the housing 204 may include a stop 212 for securing and positioning the bearing structure 208 within the housing 204 and ensure that the bearing structure 208 is positioned relative to the energy dissipating element(s) 206. When the bearing structure 208 is inserted into the housing 204, a first end 214 of the energy dissipating element 206 will contact a surface of the bearing structure 208. A locking element 216 may then be installed on the housing 204 to axially secure the bearing structure 208 axially within the housing 204. When installed and not in use, such as shown in FIGS. 2A-2B, a gap 218 may be present between a radially outward surface of the bearing structure 208 and a radially inward surface of the housing 204. With the gap 218 present, the first end 214 will still contact the surface of the bearing structure 208, such that continuous contact is maintained between the first end 214 of the energy dissipating element 206 and the bearing structure 208. A second end 220 of the energy dissipating element 206 is arranged to contact a part of the housing 204 to thereby radially restrict movement of the energy dissipating element 206.

Because the second end 220 of the energy dissipating element 206 is radially bounded by the housing 204, when the bearing structure 208 travels or expands radially outward, it will compress the energy dissipating element 206 between the bearing structure 208 and the housing 204, thereby compressing the energy dissipating element 206. As the bearing element 206 compresses, energy is imparted into the energy dissipating element 206. When the load is released, the energy dissipating element 206 will extend back to the normal state (prior to compression). As the energy dissipating element 206 compresses and absorbs energy and then recovers back to the unloaded state, a portion of the energy will be converted to heat. For example, the material of the energy dissipating element 206 may be selected to convert strain energy to heat, which may be absorbed by the housing 204 or by other means, such as by the mechanisms discussed below.

In some embodiments, and as shown in FIG. 2B, the energy dissipating elements 206 may be pre-loaded such that the first end 214 of the energy dissipating element 206 maintains constant contact with the surface of the bearing structure 208. In this configuration, the pre-loading may be achieved by the act of installing the bearing structure 208 within the housing 204. In this illustrative configuration, the bearing structure 208 includes a tapered surface 222. The tapered surface 222 increases in radial position (relative to the axis 202). As the bearing structure 208 is installed and moved axially toward the stop 212, the tapered surface 222 will contact the first end 214 of the energy dissipating element 206. As the bearing structure 208 is configured to be installed axially into the housing 204, the energy dissipating element 206 will be compressed and pre-loaded as the first end 214 travels along the outer surface of the bearing structure 208 and is radially constrained by the housing 204 at the second end 220. When the bearing structure 208 is fully inserted into the housing 204, the locking element 216 may be installed to axially secure the bearing structure 208 in place and to ensure the pre-loading of the energy dissipating element 206. The locking element 216 may be a retention ring or the like.

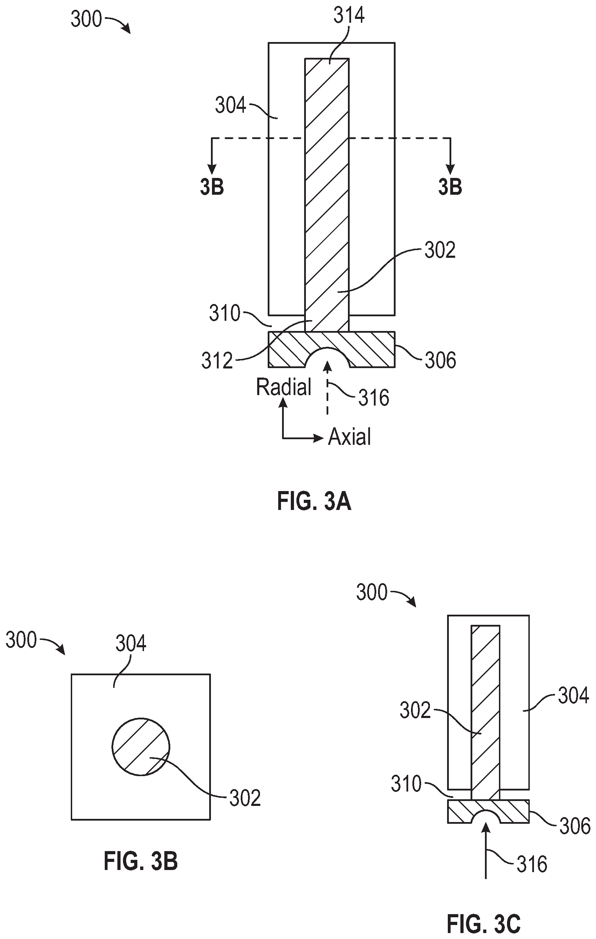

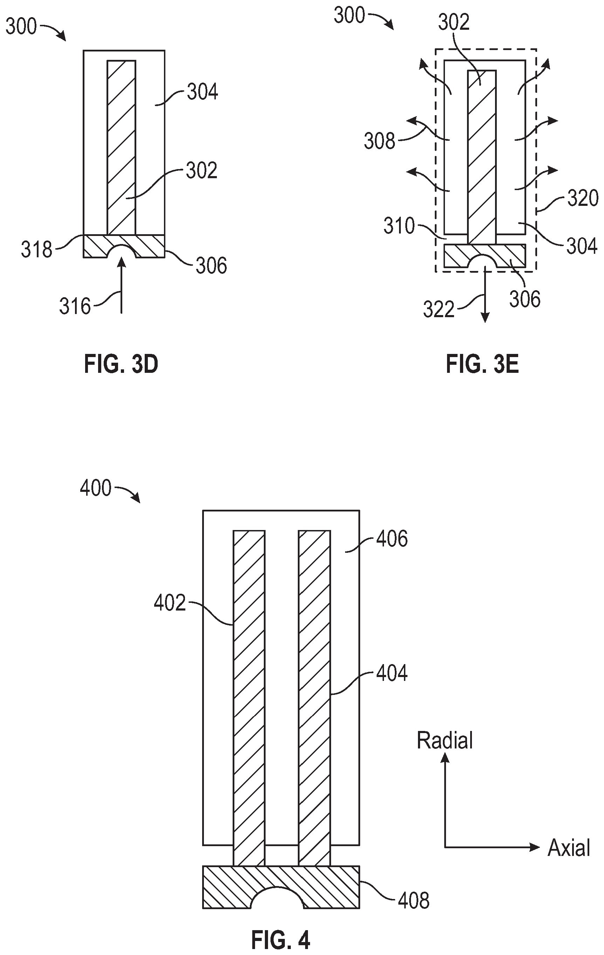

Referring now to FIGS. 3A-3E, schematic illustrations of an operation of a bearing damper system 300 are shown. The bearing damper system 300 is schematically shown and includes an energy dissipating element 302 arranged within a housing 304 and positioned relative to a bearing structure 306. The bearing damper system 300 of FIGS. 3A-3E is merely illustrative and an example of a single energy dissipating element 302. It will be appreciated that the illustrated and described operation may be expanded to describe operation of any one or more of the energy dissipating elements shown and described above or below. FIG. 3A illustrates the bearing damper system 300 when not under load, FIG. 3B is a cross-sectional illustration of the bearing damper system 300. FIGS. 3C-3E illustrate a load operation, wherein FIG. 3C illustrates the application of a radial force acting on the bearing structure 306. FIG. 3D illustrates the radial movement of the bearing structure 306 and compression of the energy dissipating element 302 within the housing 304. FIG. 3E illustrates the system with the load removed, and the energy dissipating element 302 will extend back to the normal state while releasing energy 308, such as in the form of heat.

When not under load, such as shown in FIG. 3A, the energy dissipating element 302 extends from the housing 304 across a gap 310 to contact a surface of the bearing structure 306. The energy dissipating element 302 is configured to contact the bearing structure 306 at a first end 312 of the energy dissipating element 302. A second end 314 of the energy dissipating element 302 is radially constrained by the housing 304. FIG. 3B illustrates a cross-sectional view of the bearing damper system 300, and particularly of the geometric shape of the energy dissipating element 302. In this illustrative configuration, the energy dissipating element 302 is round or circular in cross-section. It will be appreciated that the energy dissipating elements of the present disclosure may have any desired geometric shape, which may be selected for strength, surface area, machining limitations, or the like. For example, and without limitation, the energy dissipating elements may have squared, triangular, polygonal, or other geometric cross-sectional shapes.

The energy dissipating element 302 are installed within the housing 304 and surfaces of the energy dissipating element 302 are arranged to contact surfaces of the housing 304, allowing for thermal dissipation from the energy dissipating element 302 into the housing 304. However, it will be appreciated that a frictionally locked arrangement may be undesirable, as the sizing and arrangement is designed to allow for small amounts of relative radial movement between the energy dissipating element 302 and the housing 304. Accordingly, as a radial force is applied to the energy dissipating element 302, the energy dissipating element 302 may compress (i.e., shrink in radial dimension/length) relative to the housing 304. To allow for radial movement of the bearing structure 306, the gap 310 is provided between a surface of the housing 304 and the bearing structure 306. The energy dissipating element 302 may cross the gap 310 in the normal state of operation (e.g., unloaded state).

For example, as shown in FIG. 3C, an input force 316 may be applied to the bearing structure 306, which is shown in an unloaded state. The input force 316 may be a radially outward force that urges the bearing structure 306 radially outward, such as urging the bearing structure 306 radially outward toward the housing 304. As shown in FIG. 3D, in a loaded state, the gap 310 may be closed, and a reduced gap 318 may be present due to application of the input force 316. The reduced gap 318 may be a radial dimension that is less than the gap 310 or complete elimination of the gap 310 such that the bearing structure 306 contacts the surface of the housing 304. With the reduced gap 318 and the radial restriction for movement of the energy dissipating element 302 at the second end 314 within the housing 304, the energy dissipating element 302 is compressed by application of the forces. When the load is removed, such as shown in FIG. 3E, energy 308 may dissipate from the energy dissipating element 302, such as in the form of heat, which may be absorbed by the housing 304 or otherwise removed. For example, in the illustrative schematic drawing of FIG. 3E, a cooling circuit 320 may be provided to remove the heat (energy 308), and the energy dissipating element 302 will return to the normal state using less force than that was used to compress it (FIGS. 3C-3D). The cooling circuit 320 may be configured as blow air, an airflow within the engine, liquid cooling, or any other heat sink or heat dump that may be thermally coupled to the housing or to a working fluid associated with the bearing damper system 300.

In a non-limiting example, the input force 316 may be a radial compression force applied to the bearing structure 306 (compression of X Newtons (N)). At the fully compressed state (FIG. 3D, displacement of Y meters (m)), the energy dissipating element 302 has absorbed *XY* Joules (J). The energy dissipating element 302 converts a portion of this energy to heat (e.g., Z% of *XY* J). Then, when the load is removed, and the compression is released, the energy dissipating element 302 will cause an output force 322 that is less than the input force 316 (e.g., 1-Z% of *X* N). Accordingly, the output force 322 is less than the input force 316, and the difference in forces is lost as heat via the energy dissipating element 302. In one non-limiting example, the energy dissipating element 302 may be made of a MAX Phase material that is selected to convert 25% of strain energy into heat. In such an example, the input force 316 may be *X* N, which closes the gap 310 to the reduced gap 318 across a displacement of *Y* m. During this action, the energy dissipating element 302 will absorb *XY* J in the form of compressive strain and convert a portion of that energy to heat (e.g., 0.25 *XY* J). The energy dissipating element 302 will release the converted energy as part heat (e.g., 0.25 *XY* J) and the remaining energy as the output force 322 (e.g., 0.75X N) for returning to the non-loaded state. Accordingly, 25% of the energy, in this example, is converted to heat via operation of the energy dissipating element 302 and the energy is not returned back into the bearing structure 306 and associated components.

Referring now to FIG. 4, a schematic illustration of another configuration of a bearing damper system 400 is shown. The bearing damper system 400 is schematically shown and includes a first energy dissipating element 402 and a second energy dissipating element 404 arranged within a housing 406 and positioned relative to a bearing structure 408. In this configuration, the first energy dissipating element 402 and the second energy dissipating element 404 are arranged axially adjacent to each other. Both energy dissipating elements 402, 404 are arranged similar to the above-described embodiments, and thus the features and operation thereof will not be described again. The axial configuration may be implemented with a circumferential arrangement, such that each energy dissipating element arranged about the circumference may have two (or more) energy dissipating elements arranged axially. The number of energy dissipating elements in the axial direction may be based on the arrangement of the bearing assembly and/or expected input (compression) forces that will be experienced by the bearing damper system 400.

In the configuration of FIG. 4, the two energy dissipating elements 402, 404 are illustrated as circumferentially aligned, and thus are shown in a side view as next to each other. In other embodiments, the axially offset sets of energy dissipating elements may also be circumferentially offset from each other. For example, in a non-limiting configuration, a first set of energy dissipating elements may be arranged at 90° intervals about the axis (e.g., 0°, 90°, 180°, and 270°) and a second set of energy dissipating elements that is axially offset from the first set of energy dissipating elements may be arranged at an offset angle from the first set of energy dissipating elements (e.g., 45°, 135°, 225°, and 315°). The prior example is based on two sets of four energy dissipating elements equally distributed about the bearing damper system. It will be appreciated that the sets of energy dissipating elements may have more or fewer elements that that illustrated and/or explicitly described, without departing from the scope of the present disclosure, whether in one, two, three or more sets of energy dissipating elements, with the sets being axially arranged relative to each other.

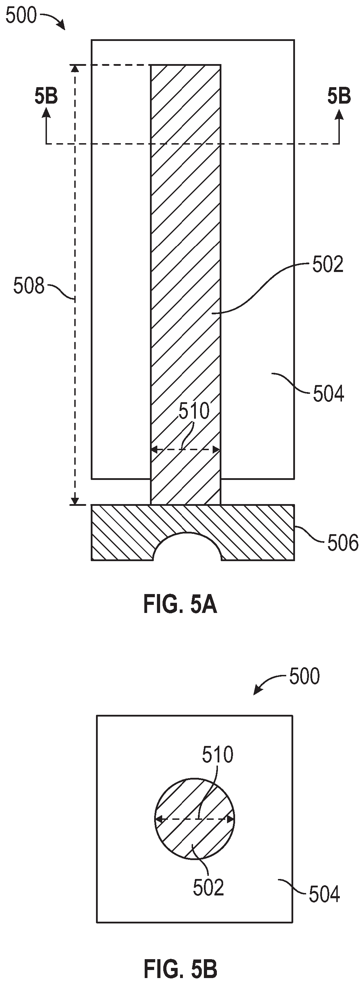

Referring now to FIGS. 5A-5B, schematic illustrations of a bearing damper system 500 in accordance with an embodiment of the present disclosure are shown. FIG. 5A is a side elevation view of a portion of the bearing damper system 500 and FIG. 5B is a cross-sectional illustration of the bearing damper system 500 viewed along the line 5B-5B shown in FIG. 5A. The bearing damper system 500 shown in FIGS. 5A-5B is a representation of a part of a bearing damper system in accordance with the present disclosure and represents a portion of a full circular or full circumferential structure (e.g., as shown in FIG. 2A).

The portion of the bearing damper system 500 shown in FIGS. 5A-5B includes an energy dissipating element 502 arranged within a housing 504 and configured to provide damping to a bearing structure 506. The energy dissipating element 502 has a length 508 and a width 510. The width 510, in this illustrative configuration, is the diameter of the energy dissipating element 502, as the energy dissipating element 502 is circular in cross-section. In other configurations, such as squared elements, the width may be the minor axis. In accordance with some embodiments of the present disclosure, and without limitation, the energy dissipating elements 502 may have a width to length ratio of 1:5 up to 1:30, inclusive. As a result, the energy dissipating elements 502 are relatively thin and long. Such geometry can provide significant damping while maintaining a low stiffness. This low stiffness but long linear length results in the ability to absorb significant amounts of energy to be converted to heat during the application of load and then release thereof. As a result, the energy dissipating elements 502 (and others described herein) may be relatively fragile. Accordingly, the energy dissipating elements 502 are supported along the length 508 by the housing 504 to prevent failure by buckling of the energy dissipating elements 502.

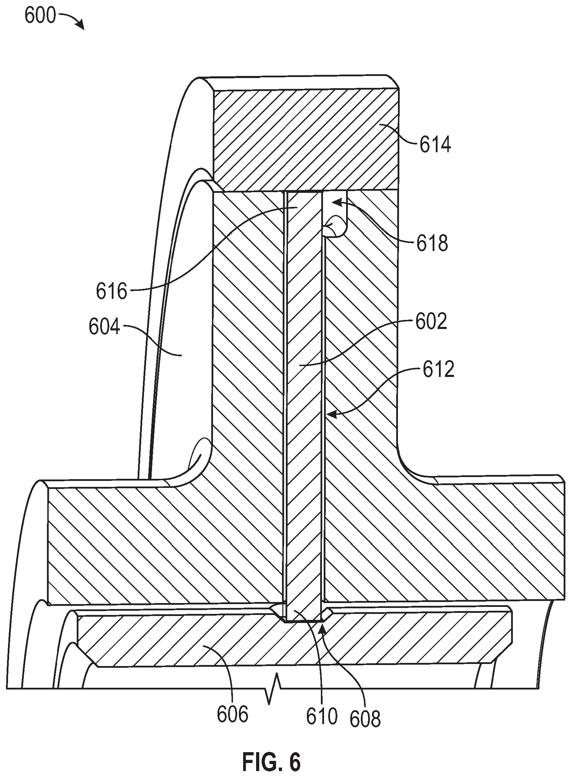

Referring now to FIG. 6, a schematic illustration of another configuration of a bearing damper system 600 in accordance with an embodiment of the present disclosure is shown. The bearing damper system 600 is configured with an energy dissipating element 602 arranged within a housing 604 and configured to support and absorb energy from a bearing structure 606. In this configuration, rather than a stop and locking element, the axial retention of the bearing structure 606 is provided by the interaction of the energy dissipating element 602 and the bearing structure 606. For example, as shown, the bearing structure 606 may include a recess 608, such as a channel or the like, which is sized and shaped to receive a first end 610 of the energy dissipating element 602. Accordingly, the energy dissipating element 602 (or the set of energy dissipating elements 602 of the bearing damper system 600) are configured to secure the axial position of the bearing structure 606 relative to the housing 604.

Also shown in this embodiment is an alternative arrangement for installing the energy dissipating element 602 within the housing 604. In the above illustrated embodiments, the energy dissipating elements are installed in blind holes that may be drilled or otherwise formed with an opening on the inner diameter of the housing. The outer diameter of the housing is substantially solid and configured to provide a radially outward stop and block to ensure that the energy dissipating element does not travel radially, but rather only absorbed the strain energy during compression. However, such blind hole configurations are not intended to be limiting. For example, in this embodiment, the energy dissipating elements 602 may be positioned within channels 612. The channels 612 of this configuration are through-holes that are open both at the radial inner end and the radial outer end of the housing 604.

Accordingly, during assembly, the bearing structure 606 may be arranged within the housing 604 and then the energy dissipating elements 602 may be inserted into the channels 612. The energy dissipating elements 602 may then be pre-loaded by a retention ring 614. The retention ring 614 may be clamped or otherwise installed about the outer diameter of the housing 604 such that a second end 616 of the energy dissipating elements 602 is contacted by the retention ring 614 and a pre-load is applied to the energy dissipating elements 602. Then, during operation, when the bearing structure 606 is moved radially outward, the energy dissipating element 602 will be compressed between an outer diameter surface of the bearing structure 606 (e.g., at the recess 608) and an inner diameter surface of the retention ring 614. Upon release of such loads, the energy dissipating elements 602 will release heat into the housing 604.

Also shown in this configuration is an alternative or additional mechanism for heat removal from the energy dissipating elements 602. The housing 604 may include a cooling channel 618 that may supply a working fluid to be in thermal communication with the energy dissipating element 602, such as at the second end 616 thereof. The working fluid may provide lubrication and operate as a thermal sink to absorb and remove heat from the energy dissipating elements 602. In some embodiments, the working fluid may be provided at a single location on the energy dissipating elements 602 (e.g., at the second end 616), as shown in FIG. 6. However, in other embodiments, the working fluid may be used throughout the system.

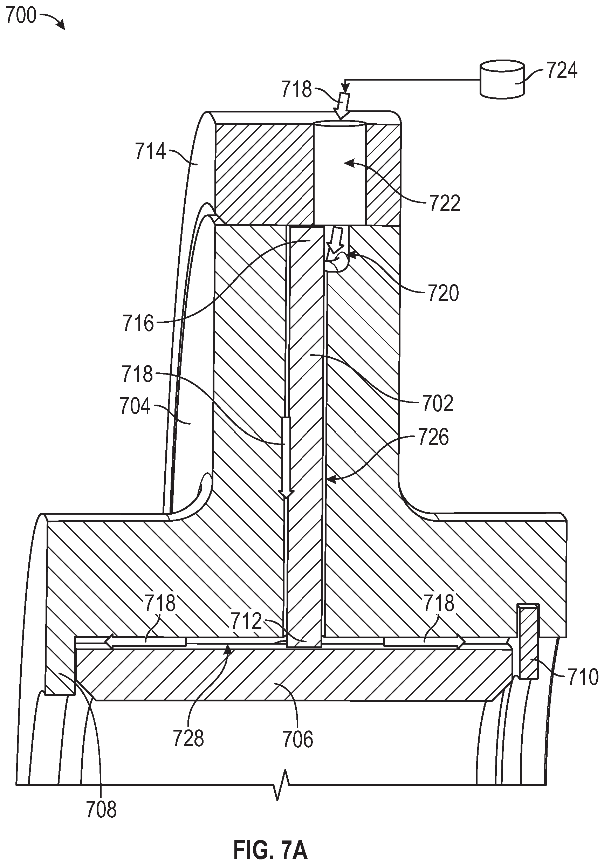

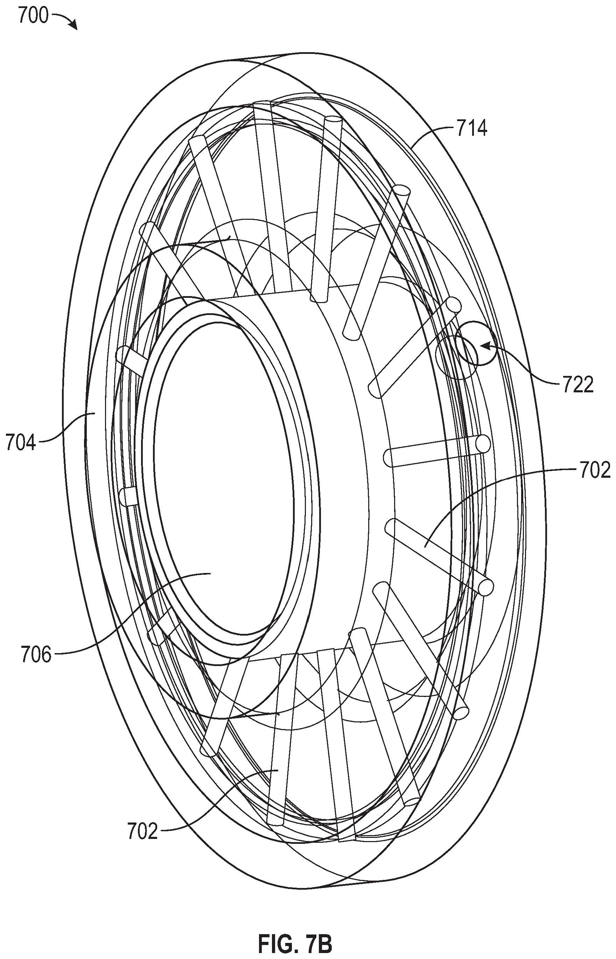

For example, with reference to FIGS. 7A-7B, another configuration of a bearing damper system 700 in accordance with an embodiment of the present disclosure are shown. The bearing damper system 700 is configured with an energy dissipating element 702 arranged within a housing 704 and configured to support and absorb energy from a bearing structure 706. In this configuration, a stop 708 of the housing 704 and a locking element 710 provide axial retention of the bearing structure 706. As such, a first end 712 of the energy dissipating element 702 may be arranged under load to contact a surface of the bearing structure 706 but does not provide axial retention of the bearing structure 706.

Similar to the configuration of FIG. 6, the energy dissipating elements 702 may then be pre-loaded by a retention ring 714. The retention ring 714 may be clamped or otherwise installed about the outer diameter of the housing 704 such that a second end 716 of the energy dissipating elements 702 is contacted by the retention ring 714 and a pre-load is applied to the energy dissipating elements 702. Then, during operation, when the bearing structure 706 is moved radially outward, the energy dissipating element 702 will be compressed between an outer diameter surface of the bearing structure 706 and an inner diameter surface of the retention ring 714. Upon release of such loads, the energy dissipating elements 702 will release heat into the housing 704 or a working fluid 718. That is, in this configuration, a working fluid 718 is supplied into and/or through the retention ring 714 and directed into a cooling channel 720 via a supply path 722 that fluidly connects a working fluid source 724 to the cooling channel 720 through the retention ring 714. The working fluid 718 may then flow along the surfaces of the energy dissipating element 702 and/or surfaces of the housing 704 that define channels 726 that receive the energy dissipating elements 702.

The working fluid 718 is provided from the working fluid source 724 and fed through one or more supply paths 722 in the retention ring 714. The working fluid 718 will fill the cooling channel 720 (e.g., annular plenum), and then travel down the length of each energy dissipating element 702, thereby providing cooling and/or a heat sink to absorb the heat/energy that is released upon release of a load applied to the energy dissipating element 702. The working fluid 718 will then exit through a gap 728 between a radially outward surface of the bearing structure 706 and a radially inward surface of the housing 704. The working fluid 718 may be gaseous (e.g., bleed air from an associated engine) or may be liquid (e.g., oil). In the case of oil as the working fluid 718, lubrication between the housing 704 and the energy dissipating element 702 may be provided. It will be appreciated that the use of oil as a working fluid may require additional considerations, such as ensuring that a maximum oil temperature is not exceeded during the release of energy from the energy dissipating element 702 into the working fluid 718. In embodiments that employ air as the working fluid 718, the flow need only be set so that maximum temperature of the base materials (e.g., the housing 704, the energy dissipating elements 702, etc.) is not exceeded.

As noted above, in accordance with embodiments of the present disclosure, the energy dissipating elements are installed with a pre-load. For example, the energy dissipating elements may be preloaded in a neutral state (non-loaded state during operation) so that the energy dissipating elements do not lose contact with the bearing structure when deflection of the bearing structure is in a direction opposite the energy dissipating element. The pre-load may be provided by the bearing structure and the housing (e.g., FIG. 2B), a retention ring and the bearing structure (e.g., FIG. 6; FIG. 7A), or by other means, as will be appreciated by those of skill in the art.

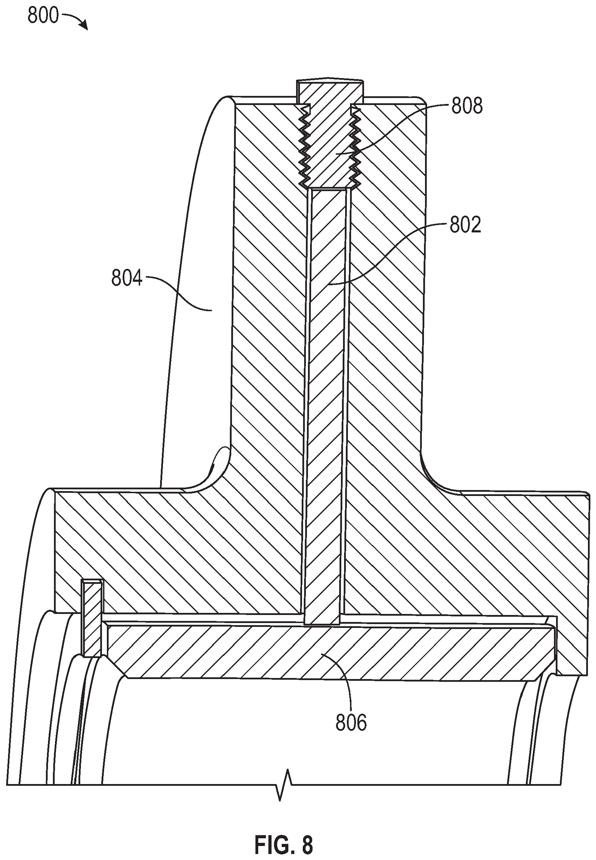

For example, referring now to FIG. 8, another configuration of a bearing damper system 800 in accordance with an embodiment of the present disclosure is shown. The bearing damper system 800 is configured with an energy dissipating element 802 arranged within a housing 804 and configured to support and absorb energy from a bearing structure 806. In this configuration, the preloading of the energy dissipating element 802 may be provided by a preload element 808. The preload element 808, in this illustration configuration, is a thread element that can be tightened to apply a preload to the energy dissipating element 802. In such configurations, the preloading may be predetermined and/or adjusted, such as by adjusting the radial position of the preload element 808. In this configuration, the preload element 808 is configured to threadedly engage with the housing 804 to provide a radial stop surface to the end of the energy dissipating element 802. It will be appreciated that other types of preload elements may be used without departing from the scope of the present disclosure. For example, and without limitation, the preload elements may be plugs that are press-fit into respective holes to plug a channel radially outward from the energy dissipating element 802.

In the above illustrated configurations, the energy dissipating elements are configured to absorb energy from a bearing structure and then disperse at least a portion of the energy as heat, into a housing or working fluid. As such, damping may be provided to the bearing assemblies or other rotating components of gas turbine engines. Additionally, in accordance with some embodiments, the bearing damper systems of the present disclosure may also provide centering functionality. For example, because the energy dissipating elements are maintained under a preload, and may be distributed evenly or equally about the bearing structure, the energy dissipating elements, in the form of radially arranged rods or pins, may center the bearing structure relative to an axis (e.g., engine axis).

In some embodiments of the present disclosure, additional centering features may be provided. For example, in accordance with some embodiments of the present disclosure, a bearing damper system as shown and described above may be combined with a squeeze film damper or other type of centering assembly or structure.

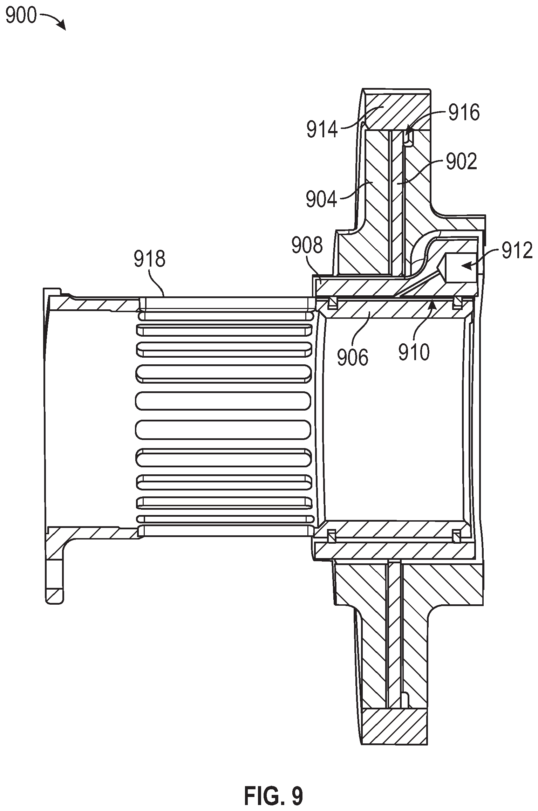

For example, referring now to FIG. 9, a schematic illustration of a bearing damper system 900 in accordance with an embodiment of the present disclosure is shown. The bearing damper system 900 is configured with an energy dissipating element 902 arranged within a housing 904 and configured to support and absorb energy from a bearing structure 906. In this configuration, an intermediate structure 908 is arranged radially between the bearing structure 906 and the energy dissipating element 902 (and housing 904). The intermediate structure 908 is arranged to form a squeeze film damper 910 between the intermediate structure 908 and the bearing structure 906 (e.g., outer race of bearing). The squeeze film damper 910 is configured to receive a working fluid (e.g., oil) from a working fluid source 912, such as a reservoir, oil supply, or the like, as will be appreciated by those of skill in the art.

The energy dissipating element 902 is configured to receive radial direction force via interaction with the intermediate structure 908, which in turn may be moved radially via interaction with the bearing structure 906. In this illustrative configuration, the bearing damper system 900 is configured with a retention ring 914 that provides a preload to the energy dissipating element 902, as described above. The retention ring 914 may also include a supply path or the like (e.g., as shown in FIG. 7A) for supplying a working fluid into a cooling channel 916 (e.g., as shown and described with respect to FIG. 7A). In some embodiments, the working fluid provided to the squeeze film damper 910 and the working fluid provided to the energy dissipating element 902 may be the same (e.g., oil). In other embodiments, the two working fluids may be different. For example, in a non-limiting example, the working fluid in the working fluid source 912 for the squeeze film damper 910 may be oil and the working fluid supplied into and along the energy dissipating element 902 may be air.

In this configuration, the bearing damper system 900 provides for two types of damping arranged in series, in the radial direction. Starting from a central axis, the arrangement of components in a radially outward direction proceeds with the bearing structure 906, the squeeze film damper 910, the intermediate structure 908, and then the energy dissipating element 902 and housing 904, with the retention ring 914 at the radial outward extent of the bearing damper system 900. In this non-limiting embodiment, a set of energy dissipating elements 902 (e.g., pins, rods, etc.) made of energy dissipating material (e.g., MAX Phase material) are arranged to act as a linear damper. The squeeze film damper 910 is arranged in series with the energy dissipating elements 902, thus increasing the damped radial travel beyond what is possible in a system having only a squeeze film damper. The working fluid of the squeeze film damper 910 (e.g., oil) may be separate from the cooling flow of the working fluid for the energy dissipating elements 902 due to the intermediate element 908 which may fluidly separate the two working fluids (e.g., enabling air cooling of the energy dissipating elements 902).

In this configuration, with the two types of damping arranged in series, an additional centering feature may be provided for ensuring centering of the bearing structure 906. As such, as shown, a squirrel cage 918 may be provided for such centering functionality. In accordance with some embodiments that include the intermediate structure 908, the energy dissipating elements 902 will not directly apply force to the bearing structure 906. As a result, the centering functionality provided in embodiments with direct contact may be less effective. Accordingly, the squirrel cage 918 can provide additional centering functionality while also maximizing the damping provided by the bearing damper system 900, which includes both the squeeze film damper 910 and the energy dissipating elements 902. As noted, the configuration shown in FIG. 9 is a series configuration. In other embodiments, the two types of dampers may be arranged in parallel.

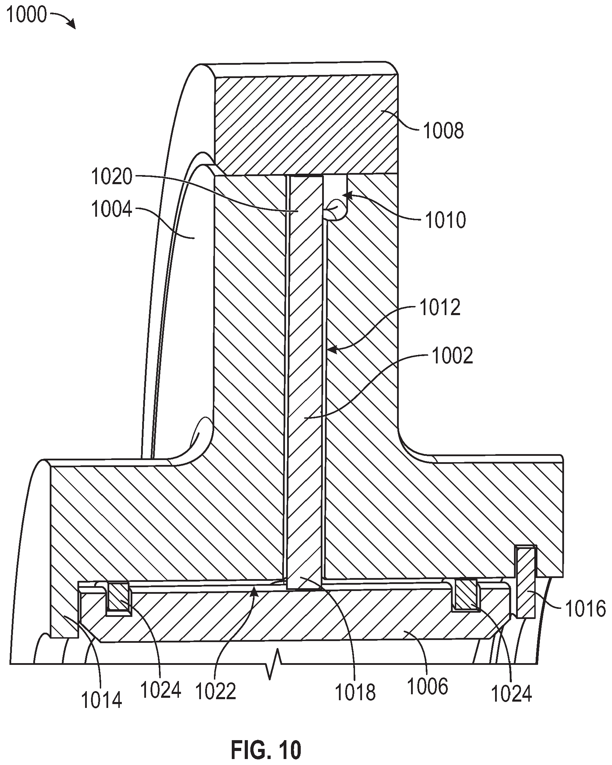

For example, referring now to FIG. 10, a schematic illustration of a bearing damper system 1000 in accordance with an embodiment of the present disclosure is shown. The bearing damper system 1000 is configured with an energy dissipating element 1002 arranged within a housing 1004 and configured to support and absorb energy from a bearing structure 1006. The energy dissipating element 1002 is configured to be preloaded by a retention ring 1008. The retention ring 1008 may be configured to allow a supply of working fluid to be provided to and along the energy dissipating element 1002 via a cooling channel 1010, as shown and described above. The working fluid from the cooling channel 1010 may flow along the sides and surfaces of the energy dissipating element 1002 through a channel 1012 that the energy dissipating element 1002 is installed within. The bearing structure 1006 is axially retained within the housing 1004 between a stop 1014 of the housing 1004 and a locking element 1016. The energy dissipating element 1002 is configured to contact the bearing structure 1006 at a first end 1018 of the energy dissipating element 1002, and the working fluid enters the channel 1012 proximate a second end 1020 of the energy dissipating element 1002.

The bearing damper system 1000 shown in FIG. 10 includes a parallel arrangement of the radial damper and centering configuration provided by the energy dissipating element 1002 with a squeeze film damper 1022. The squeeze film damper 1022 is defined in a gap or space between the bearing structure 1006 and the housing 1004. The squeeze film damper 1022 is configured to receive the working fluid from the cooling channel 1010 after it flows along the energy dissipating element 1002 through the channel 1012. The working fluid may be trapped between the housing 1004 and the bearing structure 1006 using one or more seals 1024. This space between the housing 1004 and the bearing structure 1006 may thus receive a working fluid, such as oil, which can operate to absorb the heat from the energy dissipating element 1002 and then operate as a squeeze film to provide additional damping functionality to the bearing structure 1006.

In operation, a working fluid suppled, such as oil, is fed through one or more holes (e.g., supply path 722 shown in FIGS. 7A-7B) in the retention ring 1008. The working fluid fills the annular plenum of the cooling channel 1010, then travels down the length of each energy dissipating element 1002 along the channel 1012, thereby providing cooling to the energy dissipating element 1002. The working fluid then fills the squeeze film damper 1022 between the housing 1004 and the bearing structure 1006. The working fluid may also provide lubrication between the housing 1004 and the energy dissipating element 1002, avoiding friction locking or the like. It will be appreciated that, in some such configurations, the flow of working fluid may be set so that the maximum temperature of the working fluid is not exceeded anywhere in the system. Furthermore, additional oil feed holes, without an energy dissipating elements installed therein, may be provided through the housing 1004 or via other flow path, to supply the squeeze film damper 1022 with sufficient volume of the working fluid.

Each of the bearing damper system 700 of FIGS. 7A-7B and the bearing damper system 1000 of FIG. 10 are arranged with a parallel damper arrangement, including both energy dissipating elements 702, 1002 and a squeeze film damper provided via a working fluid supplied in a gap between the bearing structure 706, 1006 and the housing 704, 1004. In the configuration shown in FIGS. 7A-7B, the parallel arrangement is unsealed, as compared to the configuration shown in FIG. 10, which is a sealed configuration by virtue of, for example, seals 1024.

Advantageously, embodiments of the present disclosure are directed to improved damper and centering assemblies for bearings, such as for use on gas turbine engines and/or other aircraft engines. In accordance with some embodiments of the present disclosure, bearing damper systems are configured to support bearing structures to provide centering and damping functionality. The bearing damper systems, in accordance with some embodiments, include a series or set of energy dissipating elements (e.g., pins, rods, shafts, etc.) made of energy dissipating material (e.g., MAX Phase material) to act as a linear damper. The energy dissipating elements are supported within holes or channels within a surrounding housing, which provides stability and structural support to the energy dissipating elements.

In accordance with embodiments of the present disclosure, the energy dissipating material any material that can absorb a portion of a load (e.g., strain, compression, etc.) and convert at least a portion of the energy to heat while recovering or rebounding to an initial shape when the load is removed. As discussed above, an example material for such energy dissipation may be MAX phase materials, and as a specific non-limiting example, MAX phase ceramics. Such MAX phase materials may be capable of converting about 25% of imparted strain energy due to load to heat during a return to an unloaded state. In operation and as the engine functions, unbalance forces may cause the rotating component (e.g., rotor, shaft, etc.) to move and/or shift radially relative to a central axis through the rotating component. The rotating component may be rotationally supported on one or more bearing assemblies or bearing structures. As such, when the rotating component is shifted radially, the bearing structure will also shift radially.

In normal operation, the rotating component is centered and not applying any load to the energy dissipating elements (e.g., unloaded state). However, during such shifts in radial position of the rotating component, the bearing structure will also shift and apply force to the energy dissipating elements (e.g., loaded state). The energy dissipating elements will undergo a compressive load. During the loaded state, the energy dissipating elements convert part of the imparted strain energy to heat, which is absorbed into a housing or working fluid. When the force from the rotating component and bearing structure is removed and the energy dissipating elements return to an uncompressed state or unloaded state, the returning force of the energy dissipating elements on the bearing structure will be less than the initial load. In accordance with some embodiments, the energy dissipating elements may return to an original shape after removal of a load, and thus transitioning from a loaded state to an unloaded state may be a return of the energy dissipating element back to its original (unloaded) shape.

In accordance with some embodiments of the present disclosure, the bearing damper system may be provided with no active cooling (e.g., FIGS. 2A-2B). In such configurations, heat is removed through radiation and conduction to the housing that supports the energy dissipating elements. In accordance with some embodiments, the energy dissipating elements may be preloaded in a neutral state so that the energy dissipating elements do not lose contact with the bearing structure when deflection is in a direction opposite or away from the energy dissipating element.

In accordance with embodiments of the present disclosure, the damping provided by the energy dissipating elements may be relatively significant while maintaining a relatively low stiffness due to the energy dissipating elements being relatively long and thin. Due to the long and thin nature of the energy dissipating elements, the energy dissipating elements are configured to be supported along the length (e.g., radial direction relative to rotating component axis) to prevent failure by buckling. The energy dissipating elements operate as dampers and centering feature simultaneously for the rotating component (e.g., shaft supported on bearing structure).

Accordingly, in accordance with embodiments of the present disclosure, improved damping and centering of rotating components of gas turbine engines is provided. The damping and centering may be provided by a single passive assembly that is arranged about the bearing structure, including a housing with a set of energy dissipating elements disposed within the housing. The energy dissipating elements are arranged to continuously contact a surface of the bearing structure and radially position the bearing structure (and other rotating component elements) at the center thereof, thereby providing a centering functionality. Such energy dissipating elements may also absorb radial deflection energy and convert it to heat which is removed, thereby reducing the energy that is present in the system during a deflection of the rotating component. In some embodiments, active cooling and/or lubrication may be provided to the energy dissipating elements. In still further embodiments, the energy dissipating elements may be arranged in combination with a squeeze film damper, either in series or parallel, to further increase the among of radial deflection damping provide by the bearing damper systems disclosed herein.

The term "about" is intended to include the degree of error associated with measurement of the particular quantity based upon the equipment available at the time of filing the application. The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made, and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure is not limited to the particular embodiment disclosed as the best mode contemplated for carrying out this present disclosure, but that the present disclosure will include all embodiments falling within the scope of the claims.

## Claims

1. A bearing damper system comprising:
a bearing structure arranged about an axis;
a housing arranged radially outward from the bearing structure relative to the axis, the housing defining a plurality of radially extending channels arranged circumferentially about the axis; and
a set of energy dissipating elements, wherein one energy dissipating element of the set of energy dissipating elements is arranged within each channel of the housing and arranged to receive a radial outward force from the bearing structure,
wherein each energy dissipating element is arranged to be compressed in response to a radial movement of the bearing structure toward the respective energy dissipating element and enter a loaded state wherein energy associated with said compression is absorbed into the material of the respective energy dissipating element,
wherein each energy dissipating element is configured to convert at least a portion of the absorbed energy to heat, and
wherein each energy dissipating element is configured to return to an unloaded state after removal of the load from the bearing structure.

2. The bearing damper system of claim 1, wherein each energy dissipating element is made from a MAX Phase material.

3. The bearing damper system of claim 2, wherein each energy dissipating element is made from a MAX Phase ceramic.

4. The bearing damper system of any of claims 1 to 3, wherein each energy dissipating element is maintained under a preload that applies a radial inward force to the bearing structure.

5. The bearing damper system of claim 4, wherein the bearing structure comprises a tapered surface, wherein during installation of the bearing structure into the housing, the tapered surface contacts ends of the energy dissipating elements and applies a preload to the energy dissipating elements.

6. The bearing damper system of claim 4 or 5, further comprising a retention ring arranged about an outer diameter of the housing, the retention ring configured to apply a preload to the plurality of energy dissipating elements.

7. The bearing damper system of claim 6, wherein the retention ring comprises a supply path to supply a working fluid to the plurality of energy dissipating elements.

8. The bearing damper system of claim 7, wherein the housing defines a cooling channel configured to receive the working fluid and direct the working fluid into thermal communication with the plurality of energy dissipating elements.

9. The bearing damper system of any of claims 4 to 8, further comprising a set of preload elements installed into the housing to apply the preload to each of the plurality of energy dissipating elements.

10. The bearing damper system of any of claims 1 to 9, wherein the plurality of energy dissipating elements define a first set of energy dissipating elements, the system further comprising a second set of energy dissipating element, wherein the energy dissipating elements of the second set of energy dissipating elements is axially offset from the energy dissipating elements of the first set of energy dissipating elements, and/or
wherein the bearing structure comprises a recess, wherein a first end of each energy dissipating element is configured to engage with the recess to axially fix the bearing structure in place.

11. The bearing damper system of any of claims 1 to 10, wherein the bearing structure is retained within the housing in an axial direction between a stop of the housing and a locking element, and/or
further comprising a squeeze film damper defined in a space between the bearing structure and the housing.

12. The bearing damper system of any of claims 1 to 11, further comprising an intermediate structure arranged between the housing and the bearing structure, wherein the intermediate structure contacts the energy dissipating elements on one side and the bearing structure on an opposite side.

13. The bearing damper system of claim 12, further comprising a squeeze film damper defined between the intermediate structure and the bearing structure, and/or
wherein the bearing structure comprises a squirrel cage.

14. The bearing damper system of any of claims 1 to 13, wherein each energy dissipating element is formed from a material that converts at least 5% of strain energy to heat, and/or
wherein each energy dissipating element has a circular cross-sectional shape, and/or
wherein each energy dissipating element has a width-to-length ration of between 1:5 and 1:30.

15. An aircraft engine comprising:
a rotating component defining an axis;
a bearing structure configured to rotationally support the rotating component;
and
a bearing damper system comprising:
a housing arranged radially outward from the bearing structure relative to the axis, the housing defining a plurality of radially extending channels arranged circumferentially about the axis; and
a set of energy dissipating elements, wherein one energy dissipating element of the set of energy dissipating elements is arranged within each channel of the housing and arranged to receive a radial outward force from the bearing structure,
wherein each energy dissipating element is arranged to be compressed in response to a radial movement of the bearing structure toward the respective energy dissipating element and enter a loaded state wherein energy associated with said compression is absorbed into the material of the respective energy dissipating element,
wherein each energy dissipating element is configured to convert at least a portion of the absorbed energy to heat, and
wherein each energy dissipating element is configured to return to an unloaded state after removal of the load from the bearing structure.
